# NEW EUROPEAN PATENT SPECIFICATION

(11) **EP 0 648 257 B2**
(45) Date of publication and mention of the opposition decision: **23.05.2007**
(45) Mention of the grant of the patent: 26.02.1997
(21) Application number: 93915731.9
(22) Date of filing: 29.06.1993
(51) Int. Cl.: C10L 1/18, C10L 1/14, C08L 23/08, C08F 8/14

(54) **OIL ADDITIVES AND COMPOSITIONS**
ÖLZUSÄTZE UND ZUSAMMENSETZUNGEN
COMPOSITIONS ET ADDITIFS POUR LE MAZOUT

(30) Priority: 30.06.1992 GB 9213827
(43) Date of publication of application: 19.04.1995
(73) Proprietor: ExxonMobil Chemical Patents, Inc., Linden, NJ 07036-0710 (US)
(72) Inventor: DAVIES, Brian William, Blewbury, Oxfordshire OX11 9PD (GB)
(74) Representative: Capaldi, Michael Joseph
(86) International application number: PCT/EP1993/001664
(87) International publication number: WO 1994/000536

(56) References cited:
- EP-A- 0 045 342
- EP-A- 0 074 208
- EP-A- 0 113 581
- WO-A-91/15562
- FR-A- 2 005 236
- FR-A- 2 061 457
- FR-A- 2 099 117
- JP-A- 5 823 885
- US-A- 3 961 916
- US-A- 4 404 000

## Description

This invention relates to oil compositions, primarily to fuel oil compositions, and more especially to fuel oil compositions susceptible to wax formation at low temperatures, and to additive compositions for such fuel oil compositions.

Heating oils and other distillate petroleum fuels, for example, diesel fuels, contain alkanes that at low temperature tend to precipitate as large crystals of wax in such a way as to form a gel structure which causes the fuel to lose its ability to flow. The lowest temperature at which the fuel will still flow is known as the pour point.

As the temperature of the fuel falls and approaches the pour point, difficulties arise in transporting the fuel through lines and pumps. Further, the wax crystals tend to plug fuel lines, screens, and filters at temperatures above the pour point. These problems are well recognized in the art, and various additives have been proposed, many of which are in commercial use, for depressing the pour point of fuel oils. Similarly, other additives have been proposed and are in commercial use for reducing the size and changing the shape of the wax crystals that do form. Smaller size crystals are desirable since they are less likely to clog a filter; certain additives inhibit the wax from crystallizing as platelets and cause it to adopt an acicular habit, the resulting needles being more likely to pass through a filter than are platelets. The additives may also have the effect of retaining in suspension in the fuel the crystals that have formed, the resulting reduced settling also assisting in prevention of blockages.

Effective wax crystal modification (as measured by CFPP and other operability tests, as well as simulated and field performance) may be achieved by ethylene-vinyl acetate or propionate copolymer (EVAC or EVPC)-based flow improvers.

JP-A-58-129096 concerns a fixed oil additive which is a copolymer of ethylene and a vinyl carboxylate, the carboxylate and copolymer having certain specific characteristics.

In EP-A-45342 is described a cold flow additive, based on an EVAC modified by esterification with 2-ethylhexanoic. acrylic, and phthalic acids.

In "Wissenschaft und Technik" 42(6), 238 (1939), M. Ratsch & M. Gebauer describe cold flow additives including an EVAC esterified with, inter alia, n-hexanoic acid.

In U.S. Patent No. 3 961 916, middle distillate flow improvers are described which comprise a wax growth arrestor and a nucleating agent, the former being preferably a lower molecular weight ethylene-vinyl ester copolymer with a higher ester content, the latter preferably a higher molecular weight copolymer with a lower ester content, the esters preferably, but not necessarily, both being vinyl acetate.

In DE-AS-2407158, middle distillate flow improvers are described, comprising a mixture of low molecular weight ethylene-vinyl ester and ethylene-acrylic acid ester copolymers, both containing at least 40 mole per cent of the ester component.

FR-A-2,061,457 describes a mixture of copolymers comprising a first copolymer of ethylene and an olefinically-unsaturated monomer containing 3 to 30 carbon atoms and having an average molecular mass between 700 and 3000, and a second copolymer ol ethylene and an olefinically-unsaturated monomer containing 3 to 60 carbon atoms and having an average molecular weight above 3000 and up to 60.000.

The present invention is concerned to provide an oil, especially a fuel oil, additive effective to improve low temperature flow of the oil, and is based on the observation that a composition comprising at least two different copolymers of ethylene with an unsaturated ester, is an effective cold flow improver having advantages over previously proposed compositions.

In a first aspect, the present invention provides a fuel oil composition comprising a fuel oil and a wax growth arrestor additive composition, being an arrestor for said fuel oil, comprising:
(i) an oil-soluble wax growth arrestor ethylene copolymer being an arrestor for said fuel oil having, in addition to units derived from ethylene, from 7.5 to 35 molar per cent of units of the formula

   -CH₂-CRR¹- I

   and (ii) an oil-soluble wax growth arrestor ethylene copolymer, being an arrestor for said fuel oil, having, in addition to units derived from ethylene, 7.5 to 35 molar per cent of units of the formula

   -CH₂-CRR²- II

   wherein each R independently represents H or CH₃, and each R¹ and R² independently represents a group of the formula COOR³ or OOCR³, wherein each R³ independently represents an alkyl or alkenyl group having at most 8 carbon atoms, provided that
   (A) when each of R¹ and R² represents OOCR³, copolymer (i) is an ethylene-vinyl acetate copolymer and/or a copolymer in which R³ is a linear alkyl group having 2 to 7 carbon atoms, and, in copolymer (ii), R³ represents a linear alkyl group having from 2 to 7 carbon atoms;
   (B) units of formula I differ from units of formula II; and
   (C) the number average molecular weights of components (i) and (ii) differ by not more than 2,000.

In the fuel oil composition one of said oil soluble wax growth arrestor ethylene copolymers may be:
an oil soluble ethylene copolymer having, in addition to units derived from ethylene, units of the formula

   -CH₂-CRR¹- I

   and units of the formula

   -CH₂-CRR²- II

   the total proportion of units of the formulae I and II in the copolymer being within the range of from 7.5 to 35 molar percent, wherein each R-independently represents H or CH₃, and each R¹ and R independently represents a group of the formula OOCR³, wherein each R³ independently represents an alkyl or alkenyl group having at most 8 carbon atoms, provided that the units of the formula are different from the units of the formula 11 and, if formula l represents -CH₂CH(OOCH₃)-, the molar proportion of units I is at least 5%.

Advantageously, R represents H.

R³ represents an alkenyl or as indicated above, preferably, an alkyl group, which is advantageously linear. If the alkyl or alkenyl group is branched, for example, as in the 2-ethylhexyl group, the α-carbon atom is advantageously part of a methylene group. Advantageously, the alkyl or alkenyl group contains from 1 (2 in the case of alkenyl) to 8 carbon atoms, and more preferably from 4 to 8 carbon atoms. As examples of alkyl or alkenyl groups there may be mentioned propyl, n-butyl, iso-butyl, and isomers, preferably the linear isomers, of pentyl, hexyl, heptyl, and octyl, and their corresponding alkenyl, advantageously alkomega-enyl, radicals. When R¹ and/or R² are of the formula OOCR³, R³ most preferably represents pentyl, and as indicated above, is advantageously n-pentyl.

Wherein, in the fuel composition of the invention, each of R¹ and R² represents OOCR³, copolymer (i) is an ethylene-vinyl acetate copolymer and/or a copolymer in which R³ is a linear alkyl group having 2 to 7 carbon atoms, and, in copolymer (ii). R³ represents a linear alkyl group having from 2 to 7 carbon atoms.

The copolymers may also contain units of formulae other than those mentioned above for example units of the formula

-CH₂-CRR⁴- III

where R⁴ represents -OH, or of the formula

-CCH₃(CH₂R⁵)-CHR⁶- IV

where R⁵ and R⁶ each independently represent hydrogen or an alkyl group with up to 4 carbon atoms, the units IV advantageously being derived from isobutylene, 2-methylbut-2-ene or 2-methylpent-2-ene.

Units of the formula I or II may be terminal units but are advantageously internal units. Advantageously, units of the formula -CRR¹-CH₂- and -CRR²-CH₂- represent from 10 to 25, preferably from 10 to 20, and most preferably from 11 to 16, mole per cent of the polymer, or, where the additive (b) is present, the polymer components (b) (i) and (ii) each contain from 10 to 25 mole per cent of units of the formula I or formula II.

The copolymer (a) and each of copolymers b(i) and (ii) advantageously have a number average molecular weight, as measured by gel permeation chromatography, of at most 14,000, advantageously at most 10,000, more advantageously in the range of 1,400 to 7,000, preferably 2,000 to 5,500 and most preferably about 4,000. The preferred number average molecular weight will depend to some extent on the number of carbon atoms in R³, the higher that number the higher the preferred molecular weight within the range above. Advantageously, the number average molecular weights of the polymers b(i) and b(ii) differ by at most 2000, more especially by at most 1000.

Polymers in which R¹ or R² represents OOCR³ are preferred and more preferably both R¹ and R² both represent OOCR³.

It is within the scope of the invention to use both a polymer (a) and the mixture of polymers (b) in the same additive composition. It is also within the scope of the invention to employ a polymer (a) having more than two different units of types I and II, or mixtures of two or more polymers (a). When employing the mixture of polymers (b), units I in polymer (b)i are different from units II in polymer (b)ii.

The invention also provides an additive concentrate comprising the additive composition defined in the first aspect in admixture with an oil or a solvent miscible with the oil. The invention further provides the use of the additive composition to improve the low temperature properties of a fuel oil.

The fuel oil may especially be a middle distillate fuel oil. Such distillate fuel oils generally boil within the range of from 110°C to 500°C, e.g. 150° to 400°C. The fuel oil may comprise atmospheric distillate or vacuum distillate, or cracked gas oil or a blend in any proportion of straight run and thermally and/or catalytically cracked distillates. The most common petroleum distillate fuels are kerosene, jet fuels, diesel fuels, heating oils and heavy fuel oils. The heating oil may be a straight atmospheric distillate, or it may contain minor amounts, e.g. up to 35 wt%, of vacuum gas oil or cracked gas oils or of both. The above-mentioned low temperature flow problem is most usually encountered with diesel fuels and with heating oils. The invention is also applicable to vegetable-based fuel oils, for example rape seed oil.

The additive or additives should preferably be soluble in the oil to the extent of at least 1000 ppm by weight per weight of oil at ambient temperature. However, at least some of the additive may come out of solution near the cloud point of the oil and function to modify the wax crystals that form.

In the composition (b) according to the invention, polymer (i) is advantageously an ethylene-vinyl acetate or propionate copolymer. Advantageously, the linearity of the polymer as expressed by the number of methyl groups per 100 methylene units, as measured by proton NMR, is from 1 to 15.

The copolymers, especially the ethylene-vinyl acetate or propionate copolymer may be made by any of the methods known in the art, e.g., by solution polymerization with free radical initiation, or by high pressure polymerization, conveniently carried out in an autoclave or a tubular reactor.

Alternatively, the or at least one polymer may be made by saponification and re-esterification of an ethylene-unsaturated ester copolymer; the copolymer may be made by saponification and re-esterification of an ethylene-vinyl acetate or propionate, or an ethylene-methyl or ethyl (meth)acrylate, copolymer.

Where R¹ and R² both represent OOCR³ the polymer may be made by saponification and re-esterification of an ethylene-vinyl acetate copolymer.

A further method of making the copolymer is by transesterification, provided that the entering acid or alcohol is less volatile than that being removed.

If desired all, or substantially all, existing ester groups may be hydrolysed and completely replaced by the desired chain substituents. Alternatively, a proportion only may be hydrolysed, so that the resulting polymer contains, for example, acetate side chains and chains of longer length.

Where a copolymer (a) is being made, a mixture of ester monomer (where the polymer is being made directly) or of acid or alcohol reactants (where re-esterification or transesterification is being effected) is used in appropriate proportions, taking any differences in reactivity of the materials into account.

In the invention polymers containing units I and units II are advantageously present in a weight ratio of from 10:1 to 1:10, preferably from 3:1 to 1:3, and more preferably in a ratio of about 1:1. If Formula I represents -CH₂-CH(OOCCH₃)- the ratio of units I to units II is advantageously within the range of from 20: 80 to 95:5, preferably 3:1 to 1:3, and more preferably in a ratio about 1:1.

The additive composition and the oil composition may contain other additives for improving low temperature and/or other properties, many of which are in use in the art or known from the literature.

For example, the composition may also contain a further ethylene-vinyl ester copolymer. As mentioned above, with reference to U.S. Patent No. 3961916, flow improver compositions may comprise a wax growth arrestor and a nucleating agent. Without wishing to be bound by any theory, the applicants believe that the additive compositions of the present invention act primarily as arrestors, and benefit from the addition of nucleators, e.g.. an ethylene-vinyl ester, especially acetate, having a number average molecular weight in the range of 1200 to 20000, and a vinyl ester content of 0.3 to 12 molar per cent, advantageously an ester content lower, and preferably at least 2. more preferably at least 3, molar per cent lower, than that of any ester in the additive composition as defined above.

The additive composition may also comprise a comb polymer. Such polymers are discussed in 'Comb-Like Polymers. Structure and Properties", N. A. Plat and V P. Shibaev, J. Poly. Sci. Macromolecular Revs., 8. p 117 to 253 (1974).

Advantageously, the comb polymer is a homopolymer having, or a copolymer at least 25 and preferably at least 40, more preferably at least 50, molar per cent of the units of which have, side chains containing at least 6, and preferably at least 10, atoms.

As examples of preferred comb polymers there may be mentioned those of the general formula 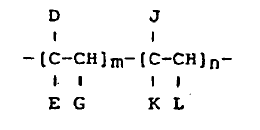 wherein
D = R¹¹, COOR¹¹, OCOR¹¹, R¹²COOR¹¹, or OR¹¹,
E = H, CH₃, D, or R¹²,
G= H or D
J = H, R¹², R¹²COOR¹¹, or an aryl or heterocyclic group,
K = H, COOR¹² OCOR¹², OR¹², or COOH,
L = H, R¹², COOR¹², OCOR¹², COOH. or aryl,
R¹¹ ≥ C₁₀ hydrocarbyl,
R¹² ≥ C₁ hydrocarbyl,
and m and n represent mole ratios, m being within the range of from 1.0 to 0.4, n being in the range of from 0 to 0.6. R¹¹ advantageously represents a hydrocarbyl group with from 10 to 30 carbon atoms, while R¹² advantageously represents a hydrocarbyl group with from 1 to 30 carbon atoms.

The comb polymer may contain units derived from other monomers if desired or required. It is within the scope of the invention to include two or more different comb copolymers.

These comb polymers may be copolymers of maleic anhydride or fumaric acid and another ethylenically unsaturated monomer, e.g., an α-olefin or an unsaturated ester, for example, vinyl acetate. It is preferred but not essential that equimolar amounts of the comonomers be used although molar proportions in the range of 2 to 1 and 1 to 2 are suitable. Examples of olefins that may be copolymerized with e.g., maleic anhydride, include 1-decene, 1 -dodecene. 1-tetradecene, 1-hexadecene, and 1-octadecane.

The copolymer may be esterified by any suitable technique and although preferred it is not essential that -the maleic anhydride or fumaric acid be at least 50% esterified. Examples of alcohols which may be used include n-decan-1-ol, n-dodecan-1 -ol, n-tetradecan-1-ol, n-hexadacan-1-ol, and n-octadecan-1 -ol. The alcohols may also include up to one methyl branch per chain, for example, 1-mathylpentadecan-1-ol, 2-methyltridecan-1-ol. The alcohol may be a mixture of normal and single methyl branched alcohols. It is preferred to use pure alcohols rather than the commercially available alcohol mixtures but if mixtures are used the R¹² refers to the average number of carbon atoms in the alkyl group; if alcohols that contain a branch at the 1 or 2 positions are used R¹² refers to the straight chain backbone segment of the alcohol.

These comb polymers may especially be fumarate or itaconate polymers and copolymers such for example as those described in European Patent Applications 153176, 153177, and 225688, and WO 91/16407.

Particularly preferred fumarate comb polymers are copolymers of alkyl fumarates and vinyl acetate, in which the alkyl groups have from 12 to 20 carbon atoms, more especially polymers in which the alkyl groups have 14 carbon atoms or in which the alkyl groups are a mixture of C₁₄/C₁₆ alkyl groups, made, for example, by solution copolymerizing an equimolar mixture of fumaric acid and vinyl acetate and reacting the resulting copolymer with the alcohol or mixture of alcohols, which are preferably straight chain alcohols. When the mixture is used it is advantageously a 1:1 by weight mixture of normal C₁₄ and C₁₆ alcohols. Furthermore, mixtures of the C₁₄ ester with the mixed C₁₄/C₁₆ ester may advantageously be used. In such mixtures, the ratio of C₁₄ to C₁₄/C₁₆ is advantageously in the range of from 1: to 4: 1, preferably 2:1 to 7:2, and most preferably about 3:1, by weight.

Other suitable comb polymers are the polymers and copolymers of α-olefins and esterified copolymers of styrene and maleic anhydride, and esterified copolymers of styrene and fumaric acid; mixtures of two or more comb polymers may be used in accordance with the invention and, as indicated above, such use may be advantageous.

The additive composition may also comprise polar nitrogen compounds, for example those described in U.S. Patent No. 4211534. especially an amide-amine salt of phthalic anhydride with two molar proportions of hydrogenated tallow amine, or the corresponding amide-amine salt of ortho-sulphobenzoic anhydride.

The additive composition of the invention may also comprise a copolymer of ethylene and at least one α-olefin, having a number average molecular weight of at least 30,000. Preferably the α-olefin has at most 20 carbon atoms. Examples of such olefins are propylene, 1-butene, isobutene, n-octene-1. isooctene-1, n-decene-1. and n-dodecene-1. The copolymer may also comprise small amounts, e.g. up to 10% by weight of other copolymerizable monomers, for example olefins other than α-olefins, and non-conjugated dienes. The preferred copolymer is an ethylene -propylene copolymer. It is within the scope of the invention to include two or more different ethylene-α-olefin copolymers of this type.

The number average molecular weight of the ethylene-α-olefin copolymer is, as indicated above, at least 30,000, as measured by gel permeation chromatography (GPC) relative to polystyrene standards, advantageously at least 60,000 and preferably at least 80,000. Functionally no upper limit arises but difficulties of mixing result from increased viscosity at molecular weights above about 150,000, and preferred molecular weight ranges are from 60,000 and 80,000 to 120,000.

Advantageously, the copolymer has a molar ethylene content between 50 and 85 per cent. More advantageously, the ethylene content is within the range of from 57 to 80%, and preferably it is in the range from 58 to 73%; more preferably from 62 to 71%, and most preferably 65 to 70%.

Preferred ethylene-α-olefin copolymers are ethylene-propylene copolymers with a molar ethylene content of from 62 to 71% and a number average molecular weight in the range 60,000 to 120,000, especially preferred copolymers are ethylene-propylene copolymers with an ethylene content of from 62 to 71 % and a molecular weight from 80,000 to 100,000.

The copolymers may be prepared by any of the methods known in the art, for example using a Ziegler type catalyst. The polymers should be substantially amorphous, since highly crystalline polymers are relatively insoluble in fuel oil at low temperatures.

The additive composition may also comprise a further ethylene-α-olefin copolymer, advantageously with a number average molecular weight of at most 7500, advantageously from 1,000 to 6,000, and preferably from 2,000 to 5,000. as measured by vapour phase osmometry. Appropriate α-olefins are as given above, or styrene, with propylene again being preferred. Advantageously the ethylene content is from 60 to 77 molar per cent although for.ethylene-propylene copolymers up to 86 molar per cent by weight ethylene may be employed with advantage.

The composition may also comprise poly(ethylene glycol) esters, advantageously of fatty acids containing from 18 to 22 carbon atoms in the chain, especially when the fuel being treated lacks higher alkanes that act as wax crystallization nucleators.

In addition, the additive composition and the fuel oil composition may contain additives for other purposes, e.g. for reducing particutale emission or inhibiting colour and sediment formation during storage.

The fuel oil composition of the invention advantageously contains the additive Composition, ie. polymer Components (i) and (ii) in a total proportion of 0.0005% to 1%, advantageously 0.001 to 0.1%, and preferably 0.004 to 0.06 %, more preferably 0.04 to 0.06% by weight, based on the,weight of fuel.

The following Examples, in which all pans and percentages are by weight, and number average molecular weights are measured by gel permeation chromatography, unless otherwise indicated, illustrate the invention.

### Example A (Comparative)

10 Kg (3.33 mole) of an ethylene-vinyl acetate copolymer containing 35% by weight vinyl acetate. Mn 3,000, degree of branching 4CH₂/100 CH₂, is charged into a flask equipped with a condenser and heated to 60°C with stirring under a nitrogen blanket. 216 g (1 mole) of sodium methoxide in 1.5 1 n-butanol is added cautiously to the polymer, and subsequently a further 4 1 of n-butanol. The solution changes from clear to orange, and the temperature falls to 46°C. The mixture is then heated to 90°C, the colour turning todeep red, and maintained at that temperature with stirring for 2 hours.

The reaction mixture is then heated at 104°C, at a pressure of 370 mm Hg, to distil off approximately 4 1 butyl acetate. The remaining viscous polymer is poured at 90°C into an acidified (150 ml 36 wt% solution of HCl) solvent comprising 100 l water and 5 l acetone. The solution is stirred for 3 hours, and the solids allowed to settle overnight at pH 6. After draining, the polymer is filtered through a fine mesh cloth and dried at 70°C.

20 g of the resulting polymer (Mn 3300, 85% hydrolysed as determined by NMR) are dissolved in an anhydrous mixture of 100 ml toluene and 10 ml pyridine. 30 ml lauroyl chloride dissolved in 100 ml toluene is added dropwise and the reaction mixture stirred for 1 hour at room temperature. The resulting solids are filtered off and solvent removed under vacuum to yield a viscous polymer. Further drying at 120°C in vacuo to remove volatiles gives 21 g of a polymer in which R¹ represents a group of the formula -OOCR³, R³ representing n-undecyl. Yield 21 g. Mn 5000.

### Example B (Comparative)

The second part of Example A was repeated, but esterifying 50 g of the saponified polymer with myristoyl chloride to give a polymer in which R¹ represents -OOCR³. R³ representing n-tridecyl. Yield 40 g, Mn 5000.

### Example C

The second part of Example A was repeated, but esterification was with hexanoyl chloride, yielding a polymer Mn 3700, in which in -OCCR³ R³ represents n-penlyl.

### Example D

The procedure of the first part of Example A was repeated, saponifying 100 g of an ethylene-vinyl acetate copolymer containing 29% by weight vinyl acetate, Mn 3,300, degree of branching CH₃/100CH₂ : 4. using 19.3 g sodium methoxide and 90 g n-butanol. Yield: 74 g; Mn 3000, 93% hydrolysis.

20 g of the resulting saponified polymer are dissolved in an anhydrous solvent comprising 150 ml toluene and 6 ml pyridine at room temperature. 10 ml hexanoyl chloride in 100 ml toluene are added dropwise and the reaction mixture stirred for 5 hours at room temperature. The product is dried as described in Example A, yielding 20 g of a similar polymer.

### Example E

The procedure of Example C was repeated, but the saponified product was re-esterified with n-heptanoyl chloride.

### Example F

The procedure of Example C was repeated, but the saponified product was re-esterified with n-octanoyl chloride.

### Example G

Into a 3 titre stirred autoclave were charged 636 g of cyclohexane, 148.5 g of vinyl butyrate, and sufficient ethylene to achieve a pressure of 97 bar (9.7 MPa) at 124°C. 18 g of t-butyl peroctoate were dissolved in 85 ml cyclohexane and metered in with a further 351 g of vinyl butyrate and ethylene to maintain the above pressure over 75 minutes. After a soak time of 10 minutes, the reactor vessel was flushed with xylene. After evaporation of solvent, 992 g of ethylene-vinyl butyrate copolymer were recovered, vinyl butyrate content 36%, Mn 2400.

### Example H

100 g of ethylene-vinyl acetate copolymer, 36% by weight vinyl acetate, Mn 3300, degree of branching CH₃:100 CH₂:4, were put into a flask fitted with a stirrer, thermocouple (connected to heat controller), nitrogen inlet and a condenser arranged for distillation, and heated to 60°C. 66.46 g (molar equivalent) of methyl octanoate and 2.268 sodium methoxide (0.1 molar equivalent, as catalyst) were added, and the mixture was heated to 80°C After 15 minutes, the reaction mixture was heated to 120°C, and maintained at that temperature, a clear distillate collecting in the condenser flask. Samples of polymer were taken at intervals to follow the progress of transesterification by comparing the height of the IR peak at 1240 cm⁻¹ (acetate group) with that at 1170 cm⁻¹ (octanoate). Alter 3½ hours, 79% of acetate groups had been replaced, and 11 g of distillate recovered. The reaction was continued at 120°C for a further 5 hours, after which time 92% of acetate groups had transesterified. After a further 4 hours at 120°C with total distillate at 18.2 g. the product was recovered. Yield 122 g. transesterification 94%. Number average molecular weight 4250.

The following fuels were used in Tests described in the following examples:

| Fuel 1 | | 2 | 3 | 4 | 5 | 6 | 7 | 8 | 9 | 10 |
|---|---|---|---|---|---|---|---|---|---|---|
| Cloud Point,°C | -5 | -6 | -5 | -3 | -6 | -7 | -12 | -3 | -4 | +8 |
| S.C. | 0.838 | 0,847 | 0.842 | 0.842 | 0.845 | 0.834 | 0.850 | 0.846 | 0.830 | 0.866 |
| CFPP, °C | -6 | -8 | -6 | -3 | -7 | -8 . | -12 | -4 | -7 | +3 |
| IBP, °C | 153 | 154 | 142 | 180 | 185 | 111 | 150 | 174 | 124 | 241 |
| FBP, °C | 354 | 361 | 360 | 364 | 364 | 357 | 360 | 369 | 357 | 372 |
| 90-20 °C | 105 | 80 | 102 | 82 | 78 | 126 | 74 | 110 | 118 | 67 |
| FBP-90 °C | 24 | 31 | 32 | 26 | 35 | 31 | 36 | 26 | 31 | 19 |
| Wax Content, % | 2.4 | 3.4 | 3.1 | 3.1 | 2.9 | 2.3 | 2.3 | 2.0 | 3.1 | 3.0 |
| at 10°C below cloud point | | | | | | | | | | |

CFPP in the Table above is measured as described in "Journal of the Institute of Petroleum", 52 (1966), 173.

### Examples 1 to 4

In these and the following numbered examples, copolymers made as described in Examples A to H above were employed in additive compositions some of which also comprise an ethylene/vinyl acetate or.propionate copolymer in admixture with one or more of the fuels identified above. The efficacy of mixtures of copolymers in reducing CFPP of the fuel concerned was compared with that of the individual copolymers alone compositions according to the invention obtain a mixture of copolymers (a) +(b). In each case, efficacy was measured on a weight for weight basis. The Table below shows the CFPP, and the CFPP of the same fuel with no additive, when the various additives were employed in the concentrations shown.
Additive (a): Ethylene/vinyl acetate copolymer, vinyl acetate 29%, Mn 2.500, branching (CH₃/100 CH₂)4.
Additive (b): Product of Example C.
Additive (a) + (b): Equal weights of (a) and (b).

| Ex. No. | Fuel No. | CFPP °C | Treat Rate. PPM | CFPP. °C with Additive | | |
|---|---|---|---|---|---|---|
| | | | | (a) | (b) | (a)+(b) |
| 1 | 4 | -3 | 200 | -6 | -6 | -11 |
| 2 | 5 | -7 | 200 | -17 | -17 | -20 |
| 3 | 8 | -4 | 100 | -15 | -5 | -19 |
| 4 | 9 | -7 | 100 | -12 | -12 | -16 |

### Examples 5 to 8

In these Examples, the reduction in CFPP of various fuels was compared using as additives:
Additive (a): Ethylene/vinyl propionate copolymer, vinyl propionate content 38% by weight, Mn 5200 CH₃/100 CH₂: 4.7.
Additive (b): Product of Example C.
Additive (a) + (b): Equal weights of (a) and (b).

| Ex. No. | Fuel No. | CFPP °C | Treat Rate, PPM | CFPP, °C with Additive | | |
|---|---|---|---|---|---|---|
| | | | | (a) | (b) | (a)+(b) |
| 5 | 1 | -6 | 300 | -15 | -14 | -18 |
| 6 | 3 | -6 | 100 | -15 | -7 | -17 |
| 7 | 4 | -3 | 200 | -11 | -6 | -14 |
| 8 | 9 | -7 | 100 | -14 | -12 | -16 |

### Examples 9 to 13

In these Examples, the saponified ethylene/vinyl acetate copolymer of Example A re-esterified by acids of different chain length was employed alone and in 1:1 admixture with the conventional copolymer used as component (a) in Examples 1 to 4. Fuel No. 10, CFPP +3, was used, and the treat rate was 500 ppm.

| Ex. No. | Chain Length including carbonyl C. | CFPP, °C with Additive | | |
|---|---|---|---|---|
| | | (a) | (b) | (a)+(b) |
| 9 | 6 | -12 | -10 | -18 |
| 10 | 7 | -12 | -6 | -15 |
| 11 | 8 | -12 | -7 | -18 |

### Examples 12 to 14

The procedure of Examples 9 to 13 was repeated on Fuel No. 8. CFPP -4°C, at a treat rate of 100 ppm.

| Ex. No. | Chain Length including carbonyl C. | CFPP, °C with Additive | | |
|---|---|---|---|---|
| | | (a) | (b) | (a)+(b) |
| 12 | 6 | -15 | -4 | -19 |
| 13 | 7 | -15 | -2 | -17 |
| 14 | 8 | -15 | -7 | -19 |

### Example 15

In this Example, an ethylene-vinyl butyrate copolymer, the product of Example G, was used alone and in 1:1 admixture with additive (a) used in Examples 1 to 4 in Fuel 10, CFPP +3°C, at a total treat rate of 500 ppm. The CFPP using additive (a) alone was -14°C. using the ethylene-vinyl butyrate copolymer alone it was -10°C. and the 1:1 mixture gave a CFPP of -16°C.

### Examples 16 and 17

The ethylene/vinyl propionate copolymer used in Example 5 as additive (a) was in these Examples used alone and in 1:1 admixture in Example 16 with an ethylene-vinyl acetate copolymer 29% vinyl acetate, Mn 3300 as component
(a) and in Example 17 with the product as Example G as component (a).

| Ex. No. | Fuel No. | CFPP°C | Treat Rate, PPM | CFPP,°C with Additive | | |
|---|---|---|---|---|---|---|
| | | | | (a) | (b) | (a)+(b) |
| 16 | 3 | -6 | 100 | -14 | -15 | -18 |
| 17 | 7 | -12 | 50 | -20 | -19 | -25 |

### Example 18

The ethylene-vinyl acetate copolymer used as polymer (a) in Example 1 was also used in this example as polymer (a), with the product of Example C as polymer (b), in a fuel at a treat rate, or the total treat rate, of 200 ppm.

| Fuel No. | CFPP °C | CFPP°C with Additive | | |
|---|---|---|---|---|
| | | (a) | (b) | (a) + (b) |
| 4 | -3 | -6 | -6 | -11 |

### Examples 19 to 27

In these Examples, the following designations were used:

| Material | Designation |
|---|---|
| The product of Example C | C |
| The product of Example D | D |
| The copolymer used as component (a) in Example | 1 |
| Mixture of 14% and 86% of EVA copolymers with 13.5% VA. Mn 5000. and 29% VA, Mn 3300 respectively | 2 |

Individual designated materials and blends thereof, in each blend in equal proportions, were used in a variety of fuels at various treat rates. The blends of designated materials gave a lower CFPP than either material alone.

| Example No. | Fuel No. | CFPP °C | Treat Rate ppm | Combination CFPP with | | | |
|---|---|---|---|---|---|---|---|
| | | | | a,b | (a) | (b) | (a)+(b) |
| 19 | 1 | -6 | 200 | 2,D | -13 | -14 | -18 |
| 20 | | | | 2,C | -13 | -14 | -17 |
| 21 | 3 | -6 | 100 | 1,D | -14 | -16 | -18 |
| 22 | | | | 2,C | -14 | -7 | -17 |
| 23 | 4 | -3 | 100 | 1,D | -6 | -12 | -14 |
| 24 | | | | 2,0 | -7 | -12 | -17 |
| 25 | | | | 1,C | -6 | -6 | -11 |
| 26 | | | | 2,C | -7 | -6 | -12 |
| 27 | | | | 1,C | -24 | -16 | -29 |

### Examples 28 to 31

Products produced by the procedure described in Example H, in Examples 28 and 30, 70% transesterified (designated 70) and in Examples 29 and 31, 94% transesterified (designated 94), in each case with octanoate, were used. Each product was used alone and in equal proportions with EVA 1.

| Example No. | Fuel No. | CFPP °C | Treat Rate ppm | Combination CFPP with | | | |
|---|---|---|---|---|---|---|---|
| | | | | a,b | (a) | (b) | (a)+(b) |
| 28 | 7 | -12 | 50 | 1.70 | -21 | -24 | -26 |
| 29 | 7 | -12 | 50 | 1,94 | -21 | -21 | -25 |
| 30 | 9 | -7 | 100 | 1.70 | -12 | -15 | -17 |
| 31 | 9 | -7 | 100 | 1,94 | -12 | -11 | -15 |

## Claims

1. A fuel oil composition comprising a fuel oil and a wax growth arrestor additive composition, being an arrestor for said fuel oil, comprising:
(i) an oil-soluble wax growth arrestor ethylene copolymer being an arrestor for said fuel oil having, in addition to units derived from ethylene, from 7.5 to 35 molar percent of units of the formula
-CH₂-CRR¹- I
and (ii) an oil-soluble wax growth arrestor ethylene copolymer, being an arrestor for said fuel oil, having in addition to units derived from ethylene from 7.5 to 35 molar percent of units of the formula
-CH₂-CRR² - II
wherein each R independently represents H or CH₃, and each R¹ and R² independently represents a group of the formula COOR³ or OOCR³, wherein each R³ independently represents an alkyl or alkenyl group having at most 8 carbon atoms, provided that
(A) when each of R¹ and R² represents OOCR³, copolymer (i) is an ethylene-vinyl acetate copolymer and/or a copolymer in which R³ is a linear alkyl group having 2 to 7 carbon atoms and, in copolymer (ii) R³ represents a linear alkyl group having from 2 to 7 carbon atoms;
(B) units of formula I differ from units of formula II; and
(C) the number average-molecular weights of components (i) and (ii) differ by not more than 2,000.

2. A fuel oil composition according to claim 1 in which one of said oil soluble wax growth arrestor ethylene copolymers is an ethylene-vinyl acetate or propionate copolymer.

3. A fuel oil composition according to claim 1 or claim 2 in which one of said oil soluble wax growth arrestor ethylene copolymers is an oil soluble ethylene copolymer having, in addition to units derived from ethylene, units of the formula
-CH₂-CRR¹- I
and units of the formula
-CH₂-CRR²- II
the total proportion of units of the formulae I and II in the copolymer being within the range of from 7.5 to 35 molar percent, wherein each R independently represents H or CH₃, and each R¹ and R² independently represents a group of the formula OOCR³, wherein each R³ independently represents an alkyl or alkenyl group having at most 8 carbon atoms, provided that the units of the formula I are different from the units of the formula II and if formula I represents -CH₂-CH(OOCCH₃)-, the molar proportion of units I is at least 5%.

4. A composition as claimed in any one of claims 1 to 3, wherein R represents H.

5. A composition as claimed in any one of claims I to 4, wherein the polymer components (i) and (ii) each contain from 10 to 25 mole per cent of units of the formula or formula II.

6. A composition as claimed in claim 5, wherein Mn is in the range of from 2,000 to 5,500.

7. A composition as claimed in any one of claims 5 and 6, wherein the polymer components (i) and (ii) each contain from 10 to 20 mole per cent of units of the formula I or formula II.

8. A composition as claimed in any one of claims 1 to 7, wherein the or at least one polymer has been made by saponification and re-esterification of an ethylene-unsaturated ester copolymer.

9. A composition as claimed in any one of claims 1 to 7, whreein R¹ and R² both represent -OOCR³ and the polymer has been made by saponification and re-esterification of an ethylene-vinyl acetate copolymer.

10. A composition as claimed in any one of claims 1 to 9 which also comprises a wax nucleator.

11. A composition as claimed in claim 10, wherein the wax nucleator is an ethylene-vinyl ester copolymer having an ester content at least 2 molar per cent lower than the lower representative of polymers (i) and (ii).

12. A composition as claimed in any one of claims 1 to 11, which also comprises a comb polymer.

13. A composition as claimed in claim 12, wherein the comb polymer is of the general formula 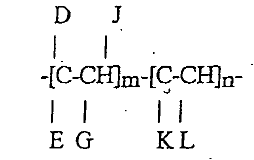 wherein D = R¹¹, COOR¹¹, OCOR¹¹, R¹²COOR¹¹, or OR¹¹,
E = H, CH₃, D, or R¹²,
G=HorD
J = H, R¹², R¹²COOR¹¹, or an aryl or heterocyclic group,
K = H, COOR¹², OCOR¹², OR¹², or COOH,
L = H, R¹², COOR¹², OCOR¹², COOH, or aryl,
R¹¹ ≥ C₁₀ hydrocarbyl,
R¹² ≥ C₁ hydrocarbyl,
and m and n represent mole ratios, m being within the range of from 1.0 to 0.4, n being in the range of from 0 to 0.6.

14. A composition as claimed in claim 12 or claim 13, wherein the comb polymer is a copolymer of vinyl acetate and a fumarate ester.

15. A composition as claimed in claim 14, wherein the ester groups are alkyl groups having from 12 to 20 carbon atoms.

16. A composition as claimed in claim 15, wherein the ester groups are derived from an alcohol having 14 carbon atoms, or a mixture of alcohols having 14 and 16 carbon atoms.

17. A composition as claimed in any one of claims 1 to 11, which comprises a mixture of two or more different comb polymers.

18. A composition as claimed in claim 12, wherein the mixture comprises
(i) a C₁₄ fumarate ester-vinyl acetate copolymer and
(ii) a C₁₄/C₁₆ fumarate ester-vinyl acetate copolymer.

19. A composition as claimed in any one of claims 1 to 18, which also comprises a polar nitrogen compound.

20. A composition as claimed in any one of claims 1 to 19, which contains the additive composition in a total proportion of from 0.0005 to 1%, based on the weight of oil.

21. A composition as claimed in claim 20, which contains the additive in a total proportion of from 0.001 to 0.1 %, based on the weight of oil.

22. A composition as claimed in claim 21, which contains the additive in a total proportion of from 0.004 to 0.06%, based on the weight of oil.

23. An additive concentrate comprising the additive composition defined in any one of claims 1 to 19 in an oil or a solvent miscible with oil.

24. The use of an additive composition as defined in any one of claims 1 to 22 to improve the low temperature properties of a fuel oil.

## Patentansprüche

1. Brennstoffölzusammensetzung, die ein Brennstofföl und eine Additivzusammensetzung als Hemmstoff des Wachstums von Paraffinkristallen umfasst, welche für das Brennstofföl ein Hemmstoff ist und
(i) ein öllösliches Ethylencopolymer als Hemmstoff des Wachstums von Paraffinkristallen, welches für das Brennstofföl ein Hemmstoff ist, das zusätzlich zu von Ethylen abgeleiteten Einheiten 7,5 bis 35 Mol.% Einheiten mit der Formel
-CH₂-CRR¹- I
und (ii) ein öllösliches Ethylencopolymer als Hemmstoff des Wachstums von Paraffinkristallen umfasst, welches für das Brennstofföl ein Hemmstoff ist, das zusätzlich zu von Ethylen abgeleiteten Einheiten 7,5 bis 35 Mol.% Einheiten mit der Formel
-CH₂-CRR²- II
aufweist, wobei jedes R unabhängig H oder CH₃ wiedergibt und jedes R¹ und R² unabhängig eine Gruppe mit der Formel COOR³ oder OOCR³ wiedergibt, wobei jedes R³ unabhängig eine Alkyl- oder Alkenylgruppe mit höchstens 8 Kohlenstoffatomen wiedergibt, mit der Maßgabe, dass
(A) wenn jede von R¹ und R² OOCR³ wiedergeben, Copolymer (i) ein Ethylen/Vinylacetat-Copolymer und/oder ein Copolymer ist, in dem R³ eine lineare Alkylgruppe mit 2 bis 7 Kohlenstoffatomen ist, und in Copolymer (ii) R³ eine lineare Alkylgruppe mit 2 bis 7 Kohlenstoffatomen wiedergibt;
(B) sich die Einheiten der Formel I von Einheiten der Formel II unterscheiden und
(C) die durchschnittlichen Molekulargewichte (Zahlenmittel) der Komponenten (i) und (ii) sich um nicht mehr als 2 000 unterscheiden.

2. Brennstoffölzusammensetzung nach Anspruch 1, in der eines der öllöslichen Ethylencopolymere als Hemmstoff des Wachstums von Paraffinkristallen ein Ethylen-Vinylacetat- oder -propionat-Copolymer ist.

3. Brennstoffölzusammensetzung nach Anspruch 1 oder Anspruch 2, bei der eines der öllöslichen Ethylencopolymere als Hemmstoff des Wachstums von Paraffinkristallen ein öllösliches Ethylencopolymer ist, das zusätzlich zu von Ethylen abgeleiteten Einheiten Einheiten der Formel
-CH₂-CRR¹ I
und Einheiten der Formel
-CH₂-CRR² II
aufweist, wobei der Gesamtanteil der Einheiten mit den Formeln I und II in dem Copolymer in dem Bereich von 7,5 bis 35 Mol.% liegt, jedes R unabhängig H oder CH₃ wiedergibt, und jedes R¹ und R² unabhängig eine Gruppe mit der Formel OOCR³ wiedergibt, wobei jedes R³ unabhängig für eine Alkyl- oder Alkenylgruppe mit höchstens 8 Kohlenstoffatomen steht, mit der Maßgabe, dass die Einheiten der Formel I sich von den Einheiten der Formel II unterscheiden und, falls Formel I für -CH₂-CH(OOCCH₃)- steht, der Molanteil der Einheiten I mindestens 5 beträgt.

4. Zusammensetzung nach einem der Ansprüche 1 bis 3, bei der R H wiedergibt.

5. Zusammensetzung nach einem der Ansprüche 1 bis 4, bei der die Polymerkomponenten (i) und (ii) jeweils 10 bis 25 Mol.% Einheiten mit der Formel I oder Formel II enthalten.

6. Zusammensetzung nach Anspruch 5, bei der Mₙ im Bereich von 2 000 bis 5 500 liegt.

7. Zusammensetzung nach einem der Ansprüche 5 und 6, bei der die Polymerkomponenten (i) und (ii) jeweils 10 bis 20 Mol.% Einheiten mit der Formel I oder Formel II enthalten.

8. Zusammensetzung nach einem der Ansprüche 1 bis 7, bei der das oder mindestens ein Polymer durch Verseifung und Umesterung eines Copolymers aus Ethylen und ungesättigtem Ester hergestellt ist.

9. Zusammensetzung nach einem der Ansprüche 1 bis 7, bei der R¹ und R² beide -OOCR³ wiedergeben und das Polymer durch Verseifung und Umesterung von Ethylen/Vinylacetät-Copolymer hergestellt ist.

10. Zusammensetzung nach einem der Ansprüche 1 bis 9, die auch ein Paraffinkristallkeimbildungsmittel umfasst.

11. Zusammensetzung nach Anspruch 10, bei der das Paraffinkristallkeimbildungsmittel ein Ethylen/Vinylester-Copolymer mit einem Estergehalt von mindestens 2 Mol. % unter dem Estergehalt von der Polymere (i) und (ii) mit dem niedrigeren Estergehalt ist.

12. Zusammensetzung nach einem der Ansprüche 1 bis 11, die auch ein Kammpolymer umfasst.

13. Zusammensetzung nach Anspruch 12, bei der das Kammpolymer die allgemeine Formel 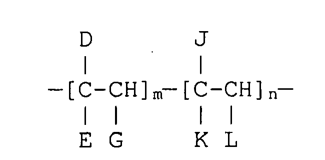 hat, in der
D = R¹¹, COOR¹¹, OCOR¹¹, R¹²COOR¹¹ oder OR¹¹,
E = H, CH₃, D oder R¹²,
G = H oder D,
J = H, R¹², R¹²COOR¹¹ oder eine Arylgruppe oder heterocyclische Gruppe,
K = H, COOR¹², OCOR¹², OR¹² oder COOH,
L = H, R¹², COOR¹², OCOR¹², OR¹², COOH oder Aryl,
_{R}¹¹ ≥ C₁₀-Kohlenwasserstoff,
R¹² ≥ C₁-Kohlenwasserstoff,
und m und n Molverhältnisse wiedergeben, wobei m im Bereich von 1,0 bis 0,4 liegt und n im Bereich von 0 bis 0,6 liegt.

14. Zusammensetzung nach Anspruch 12 oder Anspruch 13, bei der das Kammpolymer ein Copolymer von Vinylacetat und einem Fumaratester ist.

15. Zusammensetzung nach Anspruch 14, bei der die Estergruppen Alkylgruppen mit 12 bis 20 Kohlenstoffatomen sind.

16. Zusammensetzung nach Anspruch 15, bei der die Estergruppen von einem Alkohol mit 14 Kohlenstoffatomen oder einer Mischung von Alkoholen mit 14 und 16 Kohlenstoffatomen abgeleitet sind.

17. Zusammensetzung nach einem der Ansprüche 1 bis 11, die eine Mischung aus zwei oder mehr unterschiedlichen Kammpolymeren umfasst.

18. Zusammensetzung nach Anspruch 12, bei der die Mischung
(i) ein C₁₄-Fumaratester/Vinylacetat-Copolymer und
(ii) ein C₁₄/C₁₆-Fumaratester/Vinylacetat-Copolymer umfasst.

19. Zusammensetzung nach einem der Ansprüche 1 bis 18, die auch eine polare Stickstoffverbindung umfasst.

20. Zusammensetzung nach einem der Ansprüche 1 bis 19, die die Additivzusammensetzung in einem Gesamtanteil von 0,0005 bis 1 % enthält, bezogen auf das Gewicht des Öls.

21. Zusammensetzung nach Anspruch 20, die das Additiv in einem Gesamtanteil von 0,001 bis 0,1 % enthält, bezogen auf das Gewicht des Öls.

22. Zusammensetzung nach Anspruch 21, die das Additiv in einem Gesamtanteil von 0,004 bis 0,06 % enthält, bezogen auf das Gewicht des Öls.

23. Additivkonzentrat, das die Additivzusammensetzung gemäß einem der Ansprüche 1 bis 19 in einem Öl oder einem mit Öl mischbaren Lösungsmittel umfasst.

24. Verwendung einer Additivzusammensetzung gemäß einem der Ansprüche 1 bis 22 zur Verbesserung der Tieftemperatureigenschaften eines Brennstofföls.

## Revendications

1. Composition de fuel-oil, comprenant un fuel-oil et une composition d'additif de suppression de croissance des cires, qui est un suppresseur pour ledit fuel-oil, comprenant :
(i) un copolymère d'éthylène suppresseur de croissance des cires, soluble dans l'huile, qui est un suppresseur pour ledit fuel-oil, comprenant, en plus des motifs dérivés de l'éthylène, 7,5 à 35 % en moles de motifs de formule :
-CH₂- CRR¹- I
et (ii) un copolymère d'éthylène suppresseur de croissance des cires, soluble dans l'huile, qui est un suppresseur pour ledit fuel-oil, comprenant en plus des motifs dérivés de l'éthylène 7,5 à 35 % en moles de motifs de formule
-CH₂-CRR²- II
formules dans lesquelles chaque groupe R représente indépendamment H ou un groupe CH₃ et chacun des groupes R¹ et R² représente indépendamment un groupe de formule COOR³ ou OOCR³,
dans laquelle chaque groupe R³ représente indépendamment un groupe alkyle ou alcényle ayant au plus 8 atomes de carbone, sous réserve que
(A) lorsque chacun des groupes R¹ et R² représente un groupe OOCR³, le copolymère (i) est un copolymère éthylène-acétate de vinyle et/ou un copolymère dans lequel R³ représente un groupe alkyle linéaire ayant 2 à 7 atomes de carbone et, dans le copolymère (ii), R³ représente un groupe alkyle linéaire ayant 2 à 7 atomes de carbone ;
(B) les motifs de formule I diffèrent des motifs de formule II ; et
(C) les moyennes en nombre des poids moléculaires des constituants (i) et (ii) diffèrent d'une valeur non supérieure à 2000.

2. Composition de fuel-oil suivant la revendication 1, dans laquelle un desdits copolymères d'éthylène suppresseur de croissance des cires, solubles dans l'huile, est un copolymère éthylène-acétate ou propionate de vinyle.

3. Composition de fuel-oil suivant la revendication 1 ou la revendication 2, dans laquelle un desdits copolymères d'éthylène suppresseur de croissance des cires, solubles dans l'huile, est un copolymère d'éthylène, soluble dans l'huile, comprenant, en plus des motifs dérivés de l'éthylène, des motifs de formule
-CH₂-CRR¹- I
et des motifs de formule
-CH₂-CRR²- II
la proportion totale des motifs de formules I et II dans le copolymère étant comprise dans l'intervalle de 7,5 à 35 % en moles, où chaque groupe R représente indépendamment H ou un groupe CH₃ et chacun des groupes R¹ et R² représente indépendamment un groupe de formule OOCR³, dans laquelle chaque groupe R³ représente indépendamment un groupe alkyle ou alcényle ayant au plus 8 atomes de carbone, sous réserve que les motifs de formule I soient différents des motifs de formule II et que, si la formule I représente un groupe -CH₂-CH(OOCCH₃)-, la proportion molaire des motifs I soit égale à au moins 5 %.

4. Composition suivant l'une quelconque des revendications 1 à 3, dans laquelle R représente H.

5. Composition suivant l'une quelconque des revendications 1 à 4, dans laquelle les constituants polymères (i) et (ii) contiennent chacun 10 à 25 % en moles de motifs de formule I ou de formule II.

6. Composition suivant la revendication 5, dans laquelle Mn est compris dans l'intervalle de 2000 à 5500.

7. Composition suivant l'une quelconque des revendications 5 et 6, dans laquelle les constituants polymères (i) et (ii) contiennent chacun 10 à 20 % en moles de motifs de formule I ou de formule II.

8. Composition suivant l'une quelconque des revendications 1 à 7, dans laquelle le ou au moins un polymère a été préparé par saponification et réestérification d'un copolymère éthylène-ester insaturé.

9. Composition suivant l'une quelconque des revendications 1 à 7, dans laquelle R¹ et R² représentent l'un et l'autre un groupe -OOCR³ et le polymère a été préparé par saponification et réestérification d'un copolymère éthylène-acétate de vinyle.

10. Composition suivant l'une quelconque des revendications 1 à 9, qui comprend également un agent de nucléation des cires.

11. Composition suivant la revendication 10, dans laquelle l'agent de nucléation des cires est un copolymère éthylène-ester vinylique ayant une teneur en ester inférieure d'au moins 2 % en moles à la valeur représentative inférieure des polymères (i) et (ii).

12. Composition suivant l'une quelconque des revendications 1 à 11, qui comprend également un polymère en peigne.

13. Composition suivant la revendication 12, dans laquelle le polymère en peigne répond à la formule générale 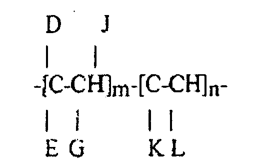 dans laquelle D représente un groupe R¹¹, COOR¹¹, OCOR¹¹, R¹²COOR¹¹ ou OR¹¹,
E représente H, un groupe CH₃, D ou R¹²,
G représente H ou un groupe D,
J représente H, un groupe R¹², R¹²COOR¹¹ ou groupe aryle ou hétérocyclique,
K représente H ou un groupe COOR¹², OCOR¹², OR¹² ou COOH,
L représente H ou un groupe R¹², COOR¹², OCOR¹², COOH ou aryle,
R¹¹ représente un groupe hydrocarbyle en C₁₀ ou plus de C₁₀ ,
R¹² représente un groupe hydrocarbyle en C₁ ou plus de C₁,
et m et n représentent des rapports molaires, m étant compris dans l'intervalle de 1,0 à 0,4 et n étant compris dans l'intervalle de 0 à 0,6.

14. Composition suivant la revendication 12 ou la revendication 13, dans laquelle le polymère en peigne est un copolymère d'acétate de vinyle et d'un ester fumarate.

15. Composition suivant la revendication 14, dans laquelle les groupes esters sont des groupes alkyle ayant 12 à 20 atomes de carbone.

16. Composition suivant la revendication 15, dans laquelle les groupes esters sont dérivés d'un alcool ayant 14 atomes de carbone, ou d'un mélange d'alcools ayant 14 et 16 atomes de carbone.

17. Composition suivant l'une quelconque des revendications 1 à 11, qui comprend également un mélange de deux ou plus de deux polymères en peigne différents.

18. Composition suivant la revendication 12, dans laquelle le mélange comprend :
(i) un copolymère ester fumarate en C₁₄-acétate de vinyle et
(ii) un copolymère ester fumarate en C₁₄/C₁₅-acétate de vinyle

19. Composition suivant l'une quelconque des revendications 1 à 18, qui comprend également un composé azoté polaire.

20. Composition suivant l'une quelconque des revendications 1 à 19, qui contient la composition d'additifs en une proportion totale de 0,0005 à 1 %, sur la base du poids de l'huile.

21. Composition suivant la revendication 20, qui contient l'additif en une proportion totale de 0,001 à 0,1 %, sur la base du poids de l'huile.

22. Composition suivant la revendication 21, qui contient l'additif en une proportion totale de 0,004 à 0,6 %, sur la base du poids de l'huile.

23. Concentré d'additif comprenant la composition d'additifs définie dans l'une quelconque des revendications 1 à 19 dans une huile ou dans un solvant miscible à l'huile.

24. Utilisation d'une composition d'additifs suivant l'une quelconque des revendications 1 à 22 pour améliorer les propriétés à basse température d'un fuel-oil.
